# EUROPEAN PATENT APPLICATION

(11) **EP 2 746 317 A1**
(43) Date of publication of application: **25.06.2014**
(21) Application number: 13186144.5
(22) Date of filing: 26.09.2013
(51) Int. Cl.: C08G 79/00, C08G 79/04

(54) **Phosphorous copolymer, method for preparing the same, and flame retardant thermoplastic resin composition including the same**

(30) Priority: 20.12.2012 KR 20120150062
(71) Applicant: CHEIL INDUSTRIES INC., Gumi-si, Gyeongsangbuk-do 730-710 (KR)
(72) Inventor: Jang, Seung Woo, Uiwang-si, Gyeonggi-do (KR); Ko, Chang Hong, Uiwang-si, Gyeonggi-do (KR)
(74) Representative: Bublak, Wolfgang

(57) **Abstract**

The present invention relates to a phosphorous copolymer, a method for preparing the same, and a flame retardant thermoplastic resin composition including the same. The phosphorous copolymer includes a repeat unit represented by Formula 1: 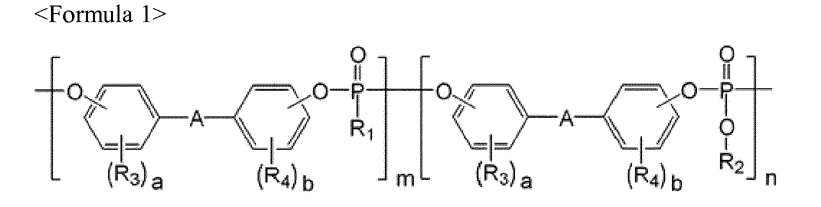 wherein A is each independently a single bond, a C₁ to C₅ alkylene group, a C₂ to C₅ alkylidene group, a C₅ to C₆ cycloalkylidene group, -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500.

## Description

The present invention relates to a phosphorous copolymer, a method for preparing the same, and a flame retardant thermoplastic resin composition including the same. More particularly, the present invention relates to a phosphorous copolymer including a phosphonate unit and a phosphate unit and exhibiting excellent flame retardancy and heat resistance, a method for preparing the same, an eco-friendly flame retardant thermoplastic resin composition which employs the same as a flame retardant and exhibits excellent properties in terms of flame retardancy, heat resistance and transparency, and a molded article formed of the resin composition.

With increasing interest in environmental problems, regulations regarded existing halogen flame retardants have been gradually strengthened throughout the world. Thus, active studies have been made to develop non-halogen flame retardants, particularly, phosphorous flame retardants. In the art, phosphate ester is most widely used as a phosphorous flame retardant, and monomolecular type phosphorous flame retardants, such as triphenyl phosphate and resorcinol bisphenol phosphate, are mainly used. However, such a monomolecular type phosphorous flame retardant has a low molecular weight and is volatilized at high temperature upon plastic molding, causing deterioration in external appearance of the plastics. Moreover, in use of products, the monomolecular type phosphorous flame retardant may escape into the environment, causing environmental pollution. Accordingly, polymerizable phosphorous flame retardants capable of overcoming such problems have attracted attention. A polymeric polyphosphonate is superior to monomolecular type phosphorous flame retardants in terms of flame retardancy, mechanical properties, heat resistance, and transparency, and is thus suited to various thermoplastic resins requiring such properties.

However, when applied to thermoplastic resins, polyphosphonate developed in the art is unsatisfactory in terms of impact strength, heat resistance, and external appearance, and can decompose the thermoplastic resins due to structural characteristics thereof, causing property deterioration. Moreover, the existing polyphosphonate has insufficient compatibility with resins and poor dispersibility.

### Summary of the Invention

Thus, it is the object of the present invention to overcome said disadvantages of the prior art and to provide a phosphorous copolymer including both a phosphonate unit and a phosphate unit and exhibiting excellent flame retardancy and heat resistance, a method for preparing the same, an eco-friendly flame retardant thermoplastic resin composition which employs the same as a flame retardant and exhibits excellent properties in terms of flame retardancy, heat resistance and transparency, and a molded article formed of the resin composition.

This object has been achieved by the provision of a phosphorous copolymer. The phosphorous copolymer includes a repeat unit represented by Formula 1: 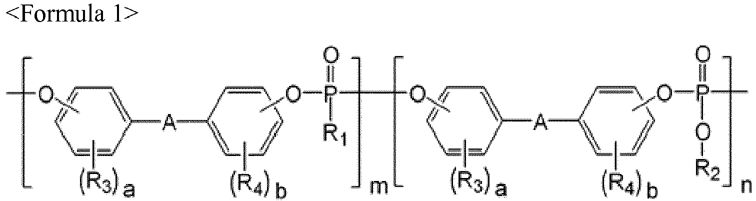 wherein A is each independently a single bond, a C₁ to C₅ alkylene group, a C₂ to C₅ alkylidene group, a C₅ to C₆ cycloalkylidene group, -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500.

In one embodiment, a ratio of the m repeat units to the n repeat units (m:n) may be 1:0.1 to 10.

In one embodiment, the phosphorous copolymer may have a weight average molecular weight from 1,000 g/mol to 50,000 g/mol.

In one embodiment, the phosphorous copolymer may have a glass transition temperature from 60°C to 200°C.

Another aspect of the invention relates to a method for preparing the phosphorous copolymer. The method includes: reacting a phosphonic dichloride compound represented by Formula 2, a dichlorophosphate compound represented by Formula 3, and a diol compound represented by Formula 4.

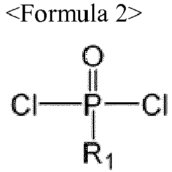

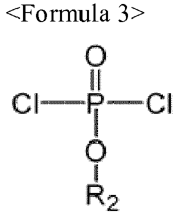

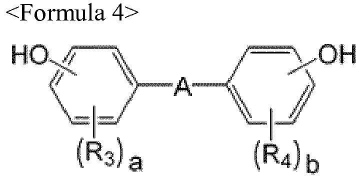

In Formulas 2 to 4, A, R₁, R₂, R₃, R₄, a and b are the same as defined in Formula 1.

In one embodiment, 1 weight equivalent of the phosphonic dichloride compound represented by Formula 2 and the dichlorophosphate compound represented by Formula 3 may be reacted with 0.5 weight equivalent to 2 weight equivalent of the diol compound represented by Formula 4.

In one embodiment, a molar ratio of the phosphonic dichloride compound represented by Formula 2 to the dichlorophosphate compound represented by Formula 3 may be 1:0.1 to 10.

A further aspect of the invention relates to a flame retardant thermoplastic resin composition. The flame retardant thermoplastic resin composition includes a thermoplastic resin, and a phosphorous copolymer including a repeat unit represented by Formula 1.

In one embodiment, the phosphorous copolymer may be present in an amount of 0.1 parts by weight to 40 parts by weight based on 100 parts by weight of the thermoplastic resin.

In one embodiment, the thermoplastic resin may include at least one of aromatic vinyl resins, polyphenylene ether resins, polycarbonate resins, acrylic resins, polyamide resins, and polyolefin resins.

The thermoplastic resin may include 50% by weight (wt%) to 99 wt% of the aromatic vinyl resin, and 1 wt% to 50 wt% of the polyphenylene ether resin.

The thermoplastic resin may include 5 wt% to 95 wt% of the polycarbonate resin, and 5 wt% to 95 wt% of the aromatic vinyl resin.

The aromatic vinyl resin may be a rubber-modified aromatic vinyl resin.

In one embodiment, the flame retardant thermoplastic resin composition may further include at least one of flame retardant aids, lubricants, plasticizers, heat stabilizers, anti-dripping agents, antioxidants, compatibilizers, photostabilizers, pigments, and dyes.

In one embodiment, the flame retardant thermoplastic resin composition may have a flame retardancy level of V-0 or higher, as measured according to the UL-94 vertical flammability test method, and a Vicat softening temperature (VST) of 100°C to 140°C.

Yet another aspect of the invention relates to a molded article formed of the flame retardant thermoplastic resin composition.

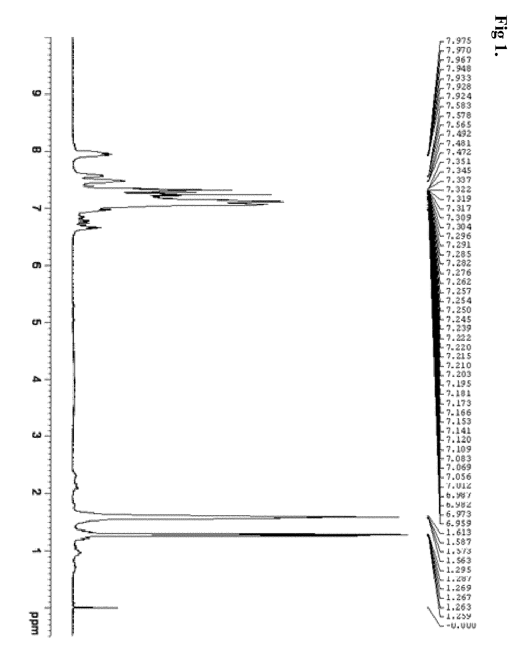

Fig. 1 is an NMR spectrum of a phosphorous copolymer prepared in Example 1.

Hereinafter, embodiments of the present invention will be described in detail.

In accordance with one embodiment, a phosphorous copolymer includes a repeat unit represented by Formula 1.

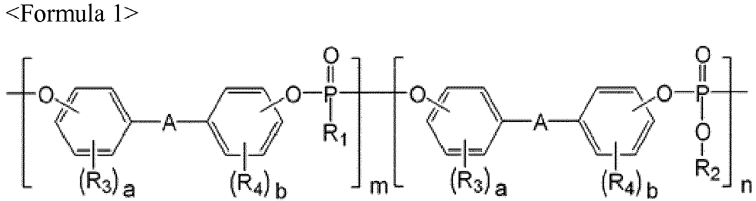

In Formula 1, A is each independently a single bond, a C₁ to C₅ alkylene group, a C₂ to C₅ alkylidene group (for example, 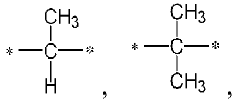 etc), a C₅ to C₆ cycloalkylidene group (for example, 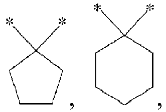 etc), -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500, preferably an integer from 4 to 500.

Here, the term "substituted" means that a hydrogen atom is substituted with a substituent group selected from the group consisting of a halogen group, a C₁ to C₃₀ alkyl group, a C₁ to C₃₀ haloalkyl group, a C₆ to C₃₀ aryl group, a C₂ to C₃₀ heteroaryl group, a C₁ to C₂₀ alkoxy group, and combinations thereof.

In one embodiment, a ratio of the m repeat units to the n repeat units (m:n) may be 1: 0.1 to 10, preferably 1: 0.3 to 3. Within this range, the phosphorous copolymer can exhibit excellent flame retardancy.

The phosphorous copolymer may have a weight average molecular weight (Mw) from 1,000 g/mol to 50,000 g/mol, as measured by gel permeation chromatography (GPC), preferably from 1,500 g/mol to 10,000 g/mol. Within this range, the phosphorous copolymer can exhibit excellent flame retardancy.

The phosphorous copolymer may have a glass transition temperature from 60°C to 200°C.

In accordance with one embodiment, a method for preparing the phosphorous copolymer includes the step of reacting a phosphonic dichloride compound represented by Formula 2, a dichlorophosphate compound represented by Formula 3, and a diol compound represented by Formula 4.

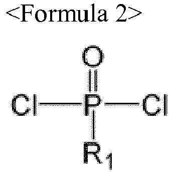

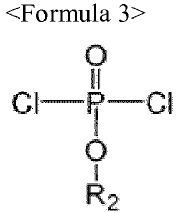

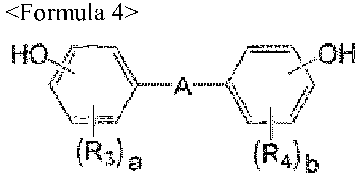

In Formulas 2 to 4, A, R₁, R₂, R₃, R₄, a and b are the same as defined in Formula 1.

Examples of the diol compound represented by Formula 4 include 4,4'-dihydroxybiphenyl, 2,2-bis-(4-hydroxyphenyl)-propane, 2,4-bis-(4-hydroxyphenyl)-2-methylbutane, 1, 1-bis-(4-hydroxyphenyl)-cyclohexane, 2,2-bis-(3-chloro-4-hydroxyphenyl)-propane, 2,2-bis-(3,5-dichloro-4-hydroxyphenyl)-propane, and the like, without being limited thereto. These compounds are used alone or in combination thereof. In one embodiment, reaction of the phosphonic dichloride compound, the dichlorophosphate compound and the diol compound may be performed by dropwise addition of the phosphonic dichloride compound and the dichlorophosphate compound to a mixture of the diol compound, a catalyst and an end-capping agent, wherein 1 weight equivalent of the phosphonic dichloride compound and the dichlorophosphate compound may be reacted with 0.5 weight equivalent to 2 weight equivalent of the diol compound represented by Formula 4, for example, 1 weight equivalent of the diol compound.

Here, a molar ratio of the phosphonic dichloride compound to the dichlorophosphate compound may be 1: 0.1 to 10, preferably 1: 0.3 to 3. Within this range, the phosphorous copolymer can exhibit excellent flame retardancy.

Reaction of the phosphonic dichloride compound, the dichlorophosphate compound and the diol compound may be performed by any typical polymerization method in the presence of a Lewis acid catalyst. Solution polymerization is preferable as the polymerization method. As the Lewis acid catalyst, aluminium chloride, magnesium chloride, and the like may be used, without being limited thereto. Relative to 1 weight equivalent of the total diol compound, the catalyst may be added in an amount of 0.01 weight equivalent to 10 weight equivalent, preferably 0.01 weight equivalent to 1 weight equivalent, more preferably 0.01 weight equivalent to 0.1 weight equivalent.

In addition, the reaction may be performed in the presence of an end-capping agent. The end-capping agent may employ a C₁ to C₅ alkyl group-containing phenol, such as phenol, 4-t-butyl phenol, 2-t-butyl phenol, and the like. Relative to 1 weight equivalent of the total diol compound, the end-capping agent may be added in an amount of 1 weight equivalent or less, preferably 0.01 weight equivalent to 0.5 weight equivalent.

In one embodiment, after the reaction, the resultant may be washed with an acid solution. The acid solution may include phosphoric acid, hydrochloric acid, nitric acid, and sulfuric acid, preferably phosphoric acid or hydrochloric acid. Here, the acid solution may have a concentration of 0.1 % to 10%, preferably 1% to 5%. After washing and filtering the resultant, the phosphorous copolymer may be obtained as a white solid.

In accordance with one embodiment, a flame retardant thermoplastic resin composition includes a thermoplastic resin, and the phosphorous copolymer as a flame retardant. The phosphorous copolymer may be present in an amount of 0.1 parts by weight to 40 parts by weight based on 100 parts by weight of the thermoplastic resin, preferably 0.5 parts by weight to 30 parts by weight, more preferably 1 part by weight to 25 parts by weight. Within this range, the flame retardant thermoplastic resin composition can exhibit excellent properties in terms of flame retardancy, heat resistance, transparency, property balance, and the like.

As the thermoplastic resin, any typical thermoplastic resin may be used without limitation. Examples of the thermoplastic resin include aromatic vinyl resins, polyphenylene ether resins, polycarbonate resins, acrylic resins, polyamide resins, polyolefin resins, and the like. These resins may be used alone or in combination thereof.

In one embodiment, in the thermoplastic resin, the aromatic vinyl resin may be present in an amount of 50 wt% to 99 wt%, preferably 50 wt% to 80 wt%, and the polyphenylene ether resin may be present in an amount of 1 wt% to 50 wt%, preferably 20 wt% to 50 wt%. Within this range, the flame retardant thermoplastic resin composition can have good property balance, such as flame retardancy, heat resistance, and the like.

In another embodiment, in the thermoplastic resin, the polycarbonate resin may be present in an amount of 5 wt% to 95 wt%, preferably 70 wt% to 90 wt%, and the aromatic vinyl resin, for example, the rubber-modified aromatic vinyl resin may be present in an amount of 5 wt% to 95 wt%, preferably 10 wt% to 30 wt%. Within this range, the composition can have good property balance such as flame retardancy, heat resistance, and the like.

Hereinafter, among the thermoplastic resins applicable to the invention, the aromatic vinyl resin, the polyphenylene ether resin and the polycarbonate resin will be described in more detail.

### Aromatic vinyl resin

The aromatic vinyl resin may be a polymer of aromatic vinyl monomers (aromatic vinyl polymer resin); a copolymer of an aromatic vinyl monomer and another monomer copolymerizable with the aromatic vinyl monomer (an aromatic vinyl copolymer); a rubber-modified aromatic vinyl copolymer including a rubbery polymer dispersed in pellet form in a matrix (continuous phase) consisting of the aromatic vinyl polymer, and the like. For example, the rubber-modified aromatic vinyl copolymer may be polymerized by adding an aromatic vinyl monomer and optionally adding another monomer, copolymerizable with the aromatic vinyl monomer, to a rubbery polymer.

Generally, the rubber-modified aromatic vinyl copolymer may be prepared by any polymerization method known in the art, such as emulsion polymerization, suspension polymerization, and mass polymerization, and typically, may be prepared using a (rubber-modified) graft copolymer alone, or using a mixture of a graft copolymer and the aromatic vinyl copolymer. For example, the rubber-modified aromatic vinyl copolymer may be prepared by mixing and extruding these two copolymers. Here, when using the mixture of the graft copolymer and the aromatic vinyl copolymer, these two copolymers may be mixed in consideration of compatibility. In addition, in mass polymerization, the rubber-modified aromatic vinyl copolymer may be prepared through single-stage reaction without separately preparing the graft copolymer and the aromatic vinyl copolymer. In either case, a rubber (rubbery polymer) may be present in an amount of 5 wt% to 50 wt% in the final rubber-modified aromatic vinyl copolymer. Further, the rubber may have a z-average particle size from 0.05 µm to 6.0 µm. Within this range, the flame retardant thermoplastic resin composition can exhibit excellent properties in terms of impact resistance, and the like.

The graft copolymer may be obtained by graft copolymerization of a rubbery polymer, an aromatic vinyl monomer, and a monomer copolymerizable with the aromatic vinyl monomer, and may further include a monomer imparting processability and heat resistance, as needed.

Examples of the rubbery polymer include diene rubbers such as polybutadiene, poly(styrene-butadiene), poly(acrylonitrile-butadiene), and the like; acrylic rubbers such as saturated rubbers obtained by adding hydrogen to the diene rubbers, isoprene rubbers, and poly(butyl acrylate); ethylene-propylene-diene monomer (EPDM) terpolymer, and the like. Among these materials, the rubbery polymer is preferably a diene rubber, more preferably a butadiene rubber. The rubbery polymer may be present in an amount of 5 wt% to 65 wt%, preferably 10 wt% to 60 wt%, more preferably 20 wt% to 50 wt%, relative to the total weight of the graft copolymer. Within this range, the composition can have excellent balance between impact strength and mechanical properties. The rubbery polymer (rubbery particles) may have an average (z-average) particle size from 0.05 µm to 6 µm, preferably from 0.15 µm to 4 µm, more preferably from 0.25 µm to 3.5 µm. Within this range, the flame retardant thermoplastic resin composition can exhibit excellent properties in terms of impact strength and appearance.

The aromatic vinyl monomer may be an aromatic vinyl monomer capable of being grafted to the rubbery copolymer. Examples of the aromatic vinyl monomer capable of being grafted to the rubbery copolymer may include styrene, α-methylstyrene, β-methylstyrene, p-methylstyrene, p-t-butylstyrene, ethylstyrene, vinylxylene, monochlorostyrene, dichlorostyrene, dibromostyrene, and vinyl naphthalene, without being limited thereto. Preferably, the aromatic vinyl monomer is styrene. The aromatic vinyl monomer may be present in an amount of 15 wt% to 94 wt%, preferably 20 wt% to 80 wt%, more preferably 30 wt% to 60 wt%, relative to the total weight of the graft copolymer. Within this range, the flame retardant thermoplastic resin composition can have excellent balance between impact strength and mechanical properties.

Examples of the monomer copolymerizable with the aromatic vinyl monomer may include vinyl cyanide compounds such as acrylonitrile; unsaturated nitriles such as ethacrylonitrile, methacrylonitrile, and the like. These monomers may be used alone or in combination thereof. The monomer copolymerizable with the aromatic vinyl monomer may be present in an amount of 1 wt% to 50 wt% relative to the total weight of the graft copolymer, preferably 5 wt% to 45 wt%, more preferably 10 wt% to 30 wt%. Within this range, the flame retardant thermoplastic resin composition can have balance of excellent impact strength and mechanical properties.

Examples of the monomer for imparting processability and heat resistance may include acrylic acid, methacrylic acid, maleic anhydride, N-substituted maleimide, and the like, without being limited thereto. The monomer for imparting processability and heat resistance is optionally present in an amount of 15 wt% or less, preferably from 0.1 wt% to 10 wt%, relative to the total weight of the graft copolymer. Within this range, the monomer can impart processability and heat resistance to the flame retardant thermoplastic resin composition without deteriorating other properties.

The aromatic vinyl copolymer may be prepared using a mixture of the monomers, excluding the rubber (rubbery polymer) among components of the graft copolymer, and the ratio of the monomers may vary depending on compatibility, and the like. For example, the aromatic vinyl copolymer may be obtained by copolymerization of the aromatic vinyl monomer and the monomer copolymerizable with the aromatic vinyl monomer.

Examples of the aromatic vinyl monomer include styrene, α -methylstyrene, β-methylstyrene, p-methylstyrene, p-t-butylstyrene, ethylstyrene, vinylxylene, monochlorostyrene, dichlorostyrene, dibromostyrene, and vinyl naphthalene, without being limited thereto. Preferably, the aromatic vinyl monomer is styrene.

In addition, examples of the monomer copolymerizable with the aromatic vinyl monomer include vinyl cyanide compounds such as acrylonitrile; unsaturated nitriles such as ethacrylonitrile, methacrylonitrile, and the like. These monomers may be used alone or in combination thereof.

The aromatic vinyl copolymer may further include the monomer for imparting processability and heat resistance, as needed. Examples of the monomer for imparting processability and heat resistance include acrylic acid, methacrylic acid, maleic anhydride, and N-substituted maleimide, without being limited thereto.

The aromatic vinyl monomer may be present in an amount of 50 wt% to 95 wt%, preferably 60 wt% to 90 wt%, more preferably 70 wt% to 80 wt%, relative to the total weight of the aromatic vinyl copolymer. Within this range, the flame retardant thermoplastic resin composition can have balance of excellent impact strength and mechanical properties.

The monomer copolymerizable with the aromatic vinyl monomer may be present in an amount of 5 wt% to 50 wt%, preferably 10 wt% to 40 wt%, more preferably 20 wt% to 30 wt%, relative to the total weight of the aromatic vinyl copolymer. Within this range, the flame retardant thermoplastic resin composition can have excellent balance between impact strength and mechanical properties.

In addition, the monomer for imparting processability and heat resistance may be optionally present in an amount of 30 wt% or less, preferably 0.1 wt% to 20 wt%, relative to the total weight of the aromatic vinyl copolymer. Within this range, the monomer can impart processability and heat resistance to the flame retardant thermoplastic resin composition without deteriorating other properties.

The aromatic vinyl copolymer may have a weight average molecular weight of 30,000 g/mol to 500,000 g/mol, without being limited thereto.

Examples of the rubber-modified aromatic vinyl copolymer include an acrylonitrile-butadiene-styrene (ABS) copolymer, an acrylonitrile-ethylene-propylene rubber-styrene (AES) copolymer, an acrylonitrile-acrylic rubber-styrene (AAS) copolymer, and the like, without being limited thereto. Here, in the ABS resin, a copolymer (g-ABS) obtained by grafting a styrene monomer, which is an aromatic vinyl compound, and an acrylonitrile monomer, which is an unsaturated nitrile compound, to a core butadiene rubbery polymer is dispersed as the graft copolymer in a styrene-acrylonitrile (SAN) copolymer as the aromatic vinyl copolymer.

Further, in the rubber-modified aromatic vinyl copolymer, the graft copolymer may be present in an amount of 10 wt% to 100 wt%, preferably 15 wt% to 90 wt%, and the aromatic vinyl copolymer may be optionally present in an amount of 90 wt% or less, preferably 10 wt% to 85 wt%. Within this range, the flame retardant thermoplastic resin composition can have excellent balance between impact strength and mechanical properties.

Examples of the aromatic vinyl resin may include polystyrene (PS), high-impact polystyrene (HIPS), an acrylonitrile-butadiene-styrene (ABS) copolymer, a styrene-acrylonitrile (SAN) copolymer, an acrylonitrile-styrene-acrylate (ASA) copolymer, and the like. These resins may be used alone or in combination thereof. A polyphenylene ether resin and a rubber-modified aromatic vinyl resin having excellent compatibility may be used.

A method for preparing the aromatic vinyl resin is well known by those skilled in the art, and the resin can be commercially obtained.

For example, the aromatic vinyl resin may be polymerized by thermal polymerization without an initiator, or in the presence of an initiator. Examples of the polymerization initiator include peroxide initiators such as benzoyl peroxide, t-butyl hydroperoxide, acetyl peroxide, cumene hydroperoxide, and the like; and azo initiators such as azobisisobutyronitrile, without being limited thereto. These initiators may be used alone or in combination thereof.

The aromatic vinyl resin may be prepared by mass polymerization, suspension polymerization, emulsion polymerization, or combinations thereof. Preferably, mass polymerization is used.

The aromatic vinyl resin may have a weight average molecular weight from 10,000 g/mol to 500,000 g/mol as measured by GPC (gel permeation chromatography), without being limited thereto.

### Polyphenylene ether resin

The polyphenylene ether resin is used to improve flame retardancy and heat resistance, and any polyphenylene ether resin typically used in flame retardant thermoplastic resin compositions may be employed. Examples of the polyphenylene ether resin include poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, a copolymer of poly(2,6-dimethyl-1,4-phenylene)ether and poly(2,3,6-trimethyl-1,4-phenylene)ether, a copolymer of poly(2,6-dimethyl-1,4-phenylene)ether and poly(2,3,6-triethyl-1,4-phenylene)ether, and the like. Among these resins, preferably, poly(2,6-dimethyl-1,4-phenylene)ether, or a copolymer of poly(2,6-dimethyl-1,4-phenylene)ether and poly(2,3,6-trimethyl-1,4-phenylene)ether is used. More preferably, poly(2,6-dimethyl-1,4-phenylene)ether is used.

Although the degree of polymerization of the polyphenylene ether resin is not particularly limited, a polyphenylene ether resin having an intrinsic viscosity from 0.2 dl/g to 0.8 dl/g, as measured in chloroform at 25°C, may be used in consideration of thermal stability, workability, and the like.

### Polycarbonate resin

The polycarbonate resin is a thermoplastic polycarbonate resin. As the polycarbonate resin, an aromatic polycarbonate resin prepared by, for example, reacting diphenols (diol compounds) represented by Formula 4 with phosgene, a halogen formate, or a carbonate diester, may be used.

Examples of diphenols, used in the polycarbonate resin, include 4,4'-dihydroxydiphenyl, 2,2-bis-(4-hydroxyphenyl)-propane (also referred to as bisphenol-A), 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, 2,2-bis-(3,5-dichloro-4-hydroxyphenyl)-propane, and the like. Preferably, 2,2-bis-(4-hydroxyphenyl)-propane, 2,2-bis-(3,5-dichloro-4-hydroxyphenyl)-propane, or 1,1-bis-(4-hydroxyphenyl)-cyclohexane is used. More preferably, 2,2-bis-(4-hydroxyphenyl)-propane is used.

The polycarbonate resin may include a branched polycarbonate resin and may be prepared by reacting diphenols with 0.05 mol% to 2 mol% of a polyfunctional compound containing tri- or higher functional groups, for example, tri or higher-valent phenol groups, with respect to the total amount of diphenols used in polymerization.

The polycarbonate resin may be used in the form of a homo-polycarbonate resin, a co-polycarbonate resin, or blends thereof.

In addition, the polycarbonate resin may be partially or completely replaced by an aromatic polyester-carbonate resin obtained by polymerization in the presence of an ester precursor, for example, a bifunctional carboxylic acid.

The polycarbonate resin may have a weight average molecular weight (Mw) from 10,000 g/mol to 200,000 g/mol, for example, from 15,000 g/mol to 80,000, without being limited thereto.

The flame retardant thermoplastic resin composition according to the invention exhibits excellent properties in terms of flame retardancy, heat resistance, and the like, and has good property balance. When evaluated on a 1.2 mm thick specimen according to the UL-94 vertical flammability test method, the composition may have a flame retardancy level of V-0 or higher. In addition, the composition may have a Vicat softening temperature of 100°C to 140°C, preferably 120°C to 130°C, as measured in accordance with ASTM D1525.

The flame retardant thermoplastic resin composition may further include additives, such as flame retardant aids, lubricants, plasticizers, heat stabilizers, anti-dripping agents, antioxidants, compatibilizers, photostabilizers, pigments, dyes, inorganic additives, and the like, as needed. These additives may be used alone or in combination thereof. For example, the additives may be present in an amount of 0.1 parts by weight to 10 parts by weight based on 100 parts by weight of the thermoplastic resin, without being limited thereto.

The flame retardant thermoplastic resin composition may be prepared in pellet form by mixing the above components and other additives, followed by melt extrusion in an extruder. Various molded articles may be produced using the prepared pellets through various molding methods, such as injection molding, extrusion, vacuum molding, cast molding, and the like. These molding methods are well known by those skilled in the art.

Since the molded article according to the invention exhibits excellent properties in terms of stiffness, flame retardancy, and the like, the molded article may be broadly applied to components of electric and electronic products, exterior materials, automobile parts, miscellaneous goods, structural materials, and the like.

Now, the present invention will be described in more detail with reference to some examples. However, it should be noted that these examples are provided for illustration only and are not to be construed in any way as limiting the present invention. A description of details apparent to those skilled in the art will be omitted for clarity.

### EXAMPLES

### Preparative Example 1: Preparation of phosphorous copolymer

1.0 kg of 2,2-bis-(4-hydroxyphenyl)-propane and, as an end-capping agent, 0.2 kg of 4-t-butylphenol and 0.03 kg of aluminium chloride were added to 5 kg of chlorobenzene, followed by heating a mixture of the above components to 131°C. Then, reaction was started by dropwise addition of 0.5 kg of phenyl dichlorophosphate and 0.4 kg of phenylphosphonic dichloride to the mixture. After completion of addition, the resultant was additionally stirred for 8 hours, and then, the reaction was finished. After the reaction, the resultant was cooled to 80°C, washed with 6 kg of 10% hydrochloric acid, and washed twice with 6 kg of purified water. After removing the aqueous layer and removing the organic layer through reduced pressure distillation, 1.8 kg of a phosphorous copolymer was obtained (acid value: 0.3 KOH mg/g). An NMR spectrum of the prepared phosphorous copolymer was measured (300 MHz, Briker AVANCE III & Ultrashield Magnet Co., Ltd.), and results are shown in Fig. 1. A weight average molecular weight (Mw) and a number average molecular weight (Mn) of the prepared phosphorous copolymer were measured by GPC (gel permeation chromatography), and a PDI (Mw/Mn) value was calculated. In addition, to evaluate heat resistance, temperature of fast degradation, char yield (wt%) at 700°C and glass transition temperature were measured using a TGA (METTLER TOLEDO) and a DSC (DSC Q100, TA Instruments). Measurement results are shown in Table 1.

**Table 1**

| Molecular weight | | | Evaluation of heat resistance | | |
|---|---|---|---|---|---|
| Mn | Mw | PDI | Temperature of fast degradation | Char yield at 700 °C (wt%) | Glass transition temperature |
| 1.5K | 2.4K | 1.7 | 350°C ∼ 550°C | 20 wt% | 82°C |

From the results shown in Table 1, it can be seen that the phosphorous copolymer (Preparation Example 1) exhibited excellent heat resistance.

Details of components used in Examples and Comparative Examples are as follows:
(A) Aromatic vinyl resin
   (A1) A rubber-modified styrene resin HG-1760S (HIPS, Cheil Industries Inc.) was used. The butadiene rubber (rubbery polymer) has an average particle diameter of 1.5 µm and is present in an amount of 6.5 wt%.
   (A2) A rubber-modified styrene resin CHT (Cheil Industries Inc.) was used. Here, the butadiene rubber (rubbery polymer) has an average particle diameter of 0.26 µm and was present in an amount of 58 wt%.
(B) Polyphenylene ether resin
   A poly(2,6-dimethyl-phenyl ether), S-202 (Asahi Kasei Co., Ltd., Japan) was used. The resin has an average particle diameter of tens of micrometers and is in powder form.
(C) Polycarbonate resin
   A bisphenol-A type polycarbonate PANLITE L-1250W (Teijin Co., Ltd., Japan) was used. The resin has a weight average molecular weight of 25,000 g/mol.
(D) Phosphorous copolymer
   The phosphorous copolymer prepared in Preparation Example 1 was used.
(E) Phosphorous compound (monomolecular type)
   (E1) CR-741S (Daihachi Co., Ltd., Japan) was used.
   (E2) PX-200 (Daihachi Co., Ltd., Japan) was used.
(F) Phosphorous polymer

A polyphosphonate, prepared by polymerizing 2,2-bis-(4-hydroxyphenyl)-propane, phenylphosphonic dichloride and 4-tert-butyl phenol as an end-capping agent, was used. The polymer has a weight average molecular weight (Mw) of 2,600 g/mol.

### Examples 1 to 3 and Comparative Examples 1 to 8

After placing these components in amounts as listed in Tables 2 and 3 in a reactor, pellets were prepared by melting, kneading and extruding a mixture thereof. Here, a twinscrew extruder having a diameter of 45 mm and an L/D value of 29 (L/D=29) was used. After dehydrating the prepared pellets at 70°C for 2 hours, specimens were prepared by injection molding using a 6 oz injection machine (molding temperature: 180°C to 280°C, mold temperature: 40°C to 80°C). The prepared specimens were evaluated by the following methods, and results are shown in Tables 2 and 3.

### Evaluation of Properties

(1) Flame retardancy and burning time: Flame retardancy and burning time were measured on each of 1/8" thick, 2.0 mm thick and 1.5 mm thick specimens according to the UL-94 vertical flammability test method.
(2) Izod impact strength (unit: kgf · cm/cm): Izod impact strength was measured on a 1/8" thick notched Izod specimen in accordance with ASTM D256.
(3) Heat resistance (Vicat softening temperature: VST, unit: °C): Vicat softening point was measured under a load of 5 kgf in accordance with ASTM D 1525.
(4) Heat deflection temperature (unit: °C): Heat deflection temperature was measured under a surface pressure of 1.82 MPa in accordance with ASTM D648.

**Table 2**

| | Example | | Comparative Example | | | | | |
|---|---|---|---|---|---|---|---|---|
| | 1 | 2 | 1 | 2 | 3 | 4 | 5 | 6 |
| (A1) (wt%) | 55 | 55 | 55 | 55 | 55 | 55 | 55 | 55 |
| (B) (wt%) | 45 | 45 | 45 | 45 | 45 | 45 | 45 | 45 |
| (D) (parts by weight) | 15 | 20 | - | - | - | - | - | - |
| (E1) (parts by weight) | - | - | 15 | 20 | - | - | - | - |
| (E2) (parts by weight) | - | - | - | - | 15 | 20 | - | - |
| (F) (parts by weight) | - | - | - | - | - | - | 15 | 20 |
| Flame Retardancy (1/8") / Total burning time | V-0 / 47 seconds | V-0 / 38 seconds | V-1 / 107 seconds | Fail | V-1 / 67 seconds | V-1/ 54 seconds | V-1 / 70 seconds | V-1 / 55 seconds |
| Heat resistance (VST, °C) | 131 | 128 | 103 | 104 | 106 | 98 | 129 | 125 |
| Heat deflection temperature (°C) | 115 | 112 | 90 | 89 | 91 | 83 | 110 | 109 |

**Table 3**

| | | Example | Comparative Example | |
|---|---|---|---|---|
| | | 3 | 7 | 8 |
| (A2) (wt%) | | 20 | 20 | 20 |
| (C) (wt%) | | 80 | 80 | 80 |
| (D) (parts by weight) | | 16.5 | - | - |
| (E1) (parts by weight) | | - | 16 | - |
| (E2) (parts by weight) | | - | 0.5 | - |
| (F) (parts by weight) | | - | - | 16.5 |
| Flame Retardancy / Total burning time | 2.0 mm | V-0 / 10 seconds | V-0 / 13 seconds | V-0 / 16 seconds |
| | 1.5 mm | V-0 / 24 seconds | V-0 / 36 seconds | V-1 / 55 seconds |
| Heat resistance (VST, °C) | | 116 | 92 | 107 |
| Izod impact strength | | 62 | 60 | 59 |

From the results shown in Table 2, it can be seen that the flame retardant thermoplastic resin compositions prepared in Examples 1 and 2, employing a polystyrene resin, a polyphenylene ether resin and the phosphorous copolymer according to the invention, exhibited excellent heat resistance while maintaining excellent flame retardancy. On the contrary, the flame retardant thermoplastic resin compositions prepared in Comparative Examples 1 to 6, employing a monomolecular type phosphorous compound or a polyphosphonate (phosphorous polymer) as a flame retardant, exhibited property deterioration in terms of flame retardancy and heat resistance, as compared with the compositions prepared in Examples.

In addition, from the results shown in Table 3, it can be seen that the flame retardant thermoplastic resin composition prepared in Example 3, employing a polycarbonate resin, a polystyrene resin (rubber-modified graft copolymer) and the phosphorous copolymer according to the invention, exhibited excellent heat resistance while maintaining excellent flame retardancy. On the contrary, it can be seen that the flame retardant thermoplastic resin composition prepared in Comparative Example 7, employing a monomolecular type phosphorous compound as the flame retardant, exhibited similar flame retardancy to the composition in Example 3, but deteriorated heat resistance. Further, in the flame retardant thermoplastic resin composition of Comparative Example 8, employing a polyphosphonate (phosphorous polymer), flame retardancy was deteriorated to a level of V-1 and burning time was deteriorated.

Although some embodiments have been described herein, it will be apparent to those skilled in the art that these embodiments are given by way of illustration only, and that various modifications, changes, alterations, and equivalent embodiments can be made without departing from the spirit and scope of the invention. The scope of the invention should be limited only by the accompanying claims and equivalents thereof.

## Claims

1. A phosphorous copolymer comprising a repeat unit represented by Formula 1: 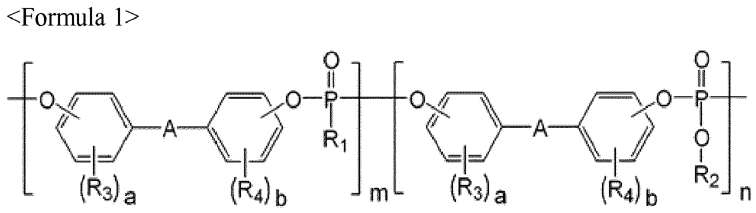 wherein A is each independently a single bond, a C₁ to C₅ alkylene group, a C₂ to C₅ alkylidene group, a C₅ to C₆ cycloalkylidene group, -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500.

2. The phosphorous copolymer according to claim 1, wherein a ratio of the m repeat units to the n repeat units (m:n) is 1 : 0.1 to 10.

3. The phosphorous copolymer according to claim 1 or 2, wherein the phosphorous copolymer has a weight average molecular weight from 1,000 g/mol to 50,000 g/mol.

4. The phosphorous copolymer according to any of claims 1 to 3, wherein the phosphorous copolymer has a glass transition temperature from 60°C to 200°C.

5. A method for preparing a phosphorous copolymer comprising a repeat unit represented by Formula 1, the method comprising: reacting a phosphonic dichloride compound represented by Formula 2, a dichlorophosphate compound represented by Formula 3, and a diol compound represented by Formula 4. 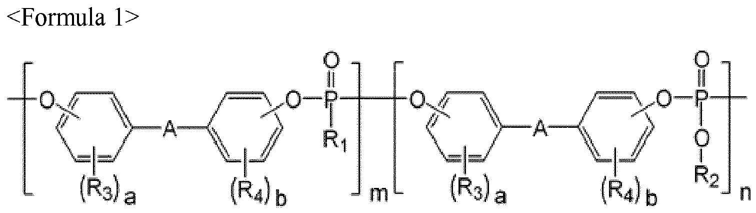 wherein A is each independently a single bond, a C₁ to C₅ alkylene group, a C₂ to C₅ alkylidene group, a C₅ to C₆ cycloalkylidene group, -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500. 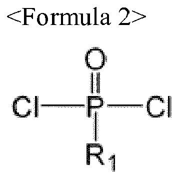 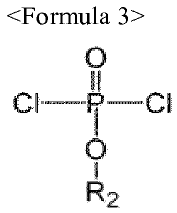 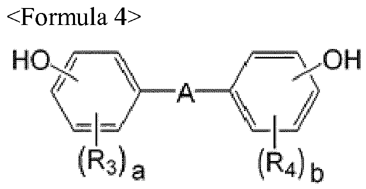 In Formulas 2 to 4, A, R₁, R₂, R₃, R₄, a and b are the same as defined in Formula 1.

6. The method according to claim 5, wherein 1 weight equivalent of the phosphonic dichloride compound represented by Formula 2 and the dichlorophosphate compound represented by Formula 3 is reacted with 0.5 weight equivalents to 2 weight equivalents of the diol compound represented by Formula 4.

7. The method according to claim 5 or 6, wherein a molar ratio of the phosphonic dichloride compound represented by Formula 2 to the dichlorophosphate compound represented by Formula 3 is 1 : 0.1 to 10.

8. The flame retardant thermoplastic resin composition comprising:
a thermoplastic resin; and
a phosphorous copolymer comprising a repeat unit represented by Formula 1: 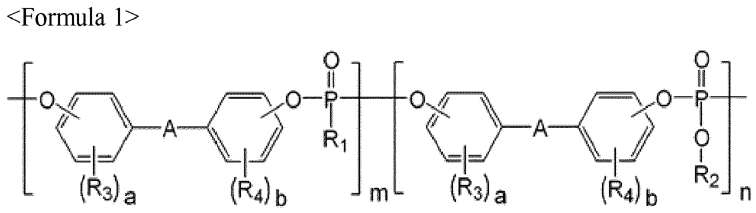 wherein A is each independently a single bond, a C₁ to C₅ alkylene group, a C₂ to C₅ alkylidene group, a C₅ to C₆ cycloalkylidene group, -S-, or -SO₂-; R₁ and R₂ are each independently a substituted or unsubstituted C₁ to C₆ alkyl group, or a substituted or unsubstituted C₆ to C₂₀ aryl group; R₃ and R₄ are each independently a substituted or unsubstituted C₁ to C₆ alkyl group, a substituted or unsubstituted C₃ to C₆ cycloalkyl group, a substituted or unsubstituted C₆ to C₁₂ aryl group, or a halogen atom; a and b are each independently an integer from 0 to 4; and m and n are each independently an integer from 1 to 500.

9. The thermoplastic resin composition according to claim 8, wherein the phosphorous copolymer is present in an amount of 0.1 parts by weight to 40 parts by weight based on 100 parts by weight of the thermoplastic resin.

10. The thermoplastic resin composition according to claim 8 or 9, wherein the thermoplastic resin comprises at least one of aromatic vinyl resins, polyphenylene ether resins, polycarbonate resins, acrylic resins, polyamide resins, and polyolefin resins.

11. The thermoplastic resin composition according to claim 10, wherein the thermoplastic resin comprises 50 wt% to 99 wt% of the aromatic vinyl resin, and 1 wt% to 50 wt% of the polyphenylene ether resin.

12. The thermoplastic resin composition according to claim 10, wherein the thermoplastic resin comprises 5 wt% to 95 wt% of the polycarbonate resin, and 5 wt% to 95 wt% of the aromatic vinyl resin.

13. The thermoplastic resin composition according to claim 12, wherein the aromatic vinyl resin is a rubber-modified aromatic vinyl resin.

14. The thermoplastic resin composition according to any of claims 8 to 13, further comprising: at least one of flame retardant aids, lubricants, plasticizers, heat stabilizers, anti-dripping agents, antioxidants, compatibilizers, photostabilizers, pigments, and dyes.

15. The thermoplastic resin composition according to any of claim 8 to 14, wherein the thermoplastic resin composition has a flame retardancy level of V-0 or higher, as measured according to the UL-94 vertical flammability test method, and a Vicat softening temperature (VST) from 100°C to 140°C.

16. A molded article obtainable of the flame retardant thermoplastic resin composition according to any one of claims 8 to 15.
